# EUROPEAN PATENT SPECIFICATION

(11) **EP 0 533 449 B1**
(45) Date of publication and mention of the grant of the patent: **12.07.1995**
(21) Application number: 92308412.3
(22) Date of filing: 16.09.1992
(51) Int. Cl.: B23B 31/36

(54) **Chuck device**
Aufspannvorrichtung
Dispositif de serrage

(30) Priority: 17.09.1991 JP 236574/91
(43) Date of publication of application: 24.03.1993
(73) Proprietor: OMI KOGYO CO., LTD., Anjo-shi Aichi-ken 446 (JP)
(72) Inventor: Takiizumi, Yoshihiko, Anjo-shi, Aichi-ken 446 (JP)
(74) Representative: Browne, Robin Forsythe, Dr.

(56) References cited:
- FR-A- 2 159 810
- GB-A- 459 455
- JP-U- 393 011

## Description

The present invention relates to a chuck device having the features of the preamble of claim 1. Such chuck devices are used for holding a workpiece for cutting it. More particularly, this invention relates to an axis adjusting mechanism for use in the chuck device, for centering the workpiece, or for rendering it eccentric with respect to the axial center of the chuck device.

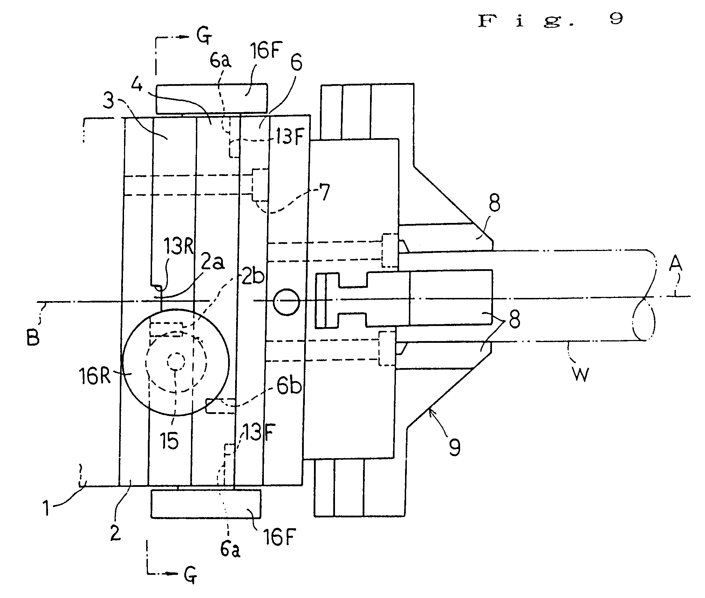

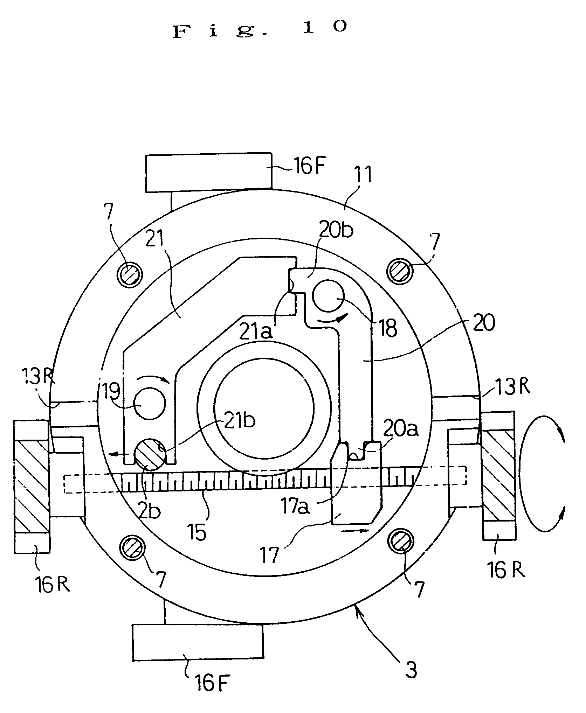

The present inventor has proposed a chuck device in Japanese Unexamined Utility Model Publication No. 3-93011, on which is based the preamble of claim 1. As shown in Figs. 9 and 10, the chuck device comprises an index plate 2, rear and front slider members 3 and 4, and a chuck plate 6 arranged in front of a base 1, and pressed against it by pre-loading bolts 7. The rear sliding member 3 has almost the same structure as the front sliding member 4. Those sliding members 3 and 4 are provided with a position adjusting mechanism, which have a handle 16R (16F), a feed screw 15 and two levers 20 and 21. The feed screw (not shown) of the front sliding member 4 is located perpendicularly to the feed screw 15 of the rear sliding member 3. The rear and front sliding members 3 and 4 are interconnected.

The workpiece W is held by chucking claws 8 of a scroll chuck 9 of the chuck device, as shown in Fig. 9. A measuring instrument (not shown), such as a dial gauge, contacts the outer surface of the workpiece W. The index plate 2, the rear and front sliding members 3 and 4, the chuck plate 6, the scroll chuck 9 and the workpiece W are rotated integrally with one another by a motor (not shown) provided in the base 1. The measuring instrument measures how much an axial center A of the workpiece W is shifted from an axial center B of the index plate 2, by the rotation of the workpiece W. After the motor is stopped, the rear and front sliding members 3 and 4 are positioned so as to reduce the eccentricity of the workpiece W with respect to the index plate 2 to zero, based on the results of the measurement.

To adjust the position of the rear sliding member 3, the handle 16R associated with that rear sliding member 3 is manipulated. At this time, the feed screw 15 is driven to move a nut 17 on the feed screw 15. For instance, when the handle 16R is operated to move the nut 17 rightward from the position shown in Fig. 10, a first lever 20 tends to rotate counterclockwise around a pivot 18, based on the engagement of a recess 17a of the nut 17 with a projection 20a provided at the distal end of the first lever 20. The rotation of the first lever 20 is transmitted to a second lever 21, based on the engagement of a projection 20b, formed at the proximal end of the first lever 20, with a recess 21a formed at the distal end of the second lever 21. As a result, the second lever 21 tends to rotate clockwise around a pivot 19.

Since a recess 21b, which is formed in the proximal end of the second lever 21, is secured to the index plate 2 and is engaged with a pin 2b projecting toward the rear sliding member 3, the movement of the second lever 21 is transmitted to the pin 2b. The index plate 2 is however fixed to the base 1. Further, projections 2a formed on the right and left sides of the index plate 2 are respectively engaged with guide grooves 13R formed in right and left sides of a flange 11 of the rear sliding member 3. The handle 16R is simultaneously rotated, and the rear sliding member 3 receives reaction from the pin 2b, via the second lever 21, the first lever 20 and the nut 17. In other words, the foregoing manipulation of the handle 16R causes the rear sliding member 3 to move rightward along the guide grooves 13R. Consequently, the front sliding member 4, the chuck plate 6, the scroll chuck 9 and the workpiece W move rightward together with the rear sliding member 3.

When the handle 16R is rotated in the reverse direction, the workpiece W and the other components 4, 6 and 9 likewise move leftward together with the rear sliding member 3. Since the rotational angle of the second lever 21 is considerably smaller than the amount of rotation of the feed screw 15, the manipulation of the handle 16R causes just a slight horizontal movement of the rear sliding member 3.

The handle 16F, which is associated with the front sliding member 4, is manipulated to adjust the position of the chuck plate 6. Like the rear sliding member 3, the front sliding member 4 has a position adjusting mechanism which includes two levers. The chuck plate 6 has a pin 6b projecting toward the front sliding member 4. Projections 6a formed at the upper and lower portions of the chuck plate 6 are respectively engaged with guide grooves 13F in the upper and lower portions of a flange in the front sliding member 4. As the handle 16F is manipulated, similarly to the rear sliding member 3, the chuck plate 6 moves slightly together with the scroll chuck 9 and the work W, in the vertical direction toward the rear and front sliding members 3 and 4.

The axial center A of the workpiece W can be matched with the axial center B of the index plate 2, by operating the individual handles 16R and 16F. The workpiece W can be made eccentric to any position to the index plate 2, if necessary, by manipulating the handles 16R and 16F.

In order to accurately center the workpiece, the two projections 2a of the index plate 2 should engage the guide grooves 13 of the rear sliding member 3 with high accuracy, and the two projections 6a of the chuck plate 6 should also engage the guide grooves 13 of the front sliding member 4 with high accuracy. Improvement of the engagement accuracy between those projections and the associated guide grooves, increases the manufacturing cost of the chuck device.

The first and second levers 20 and 21 forming the position adjusting mechanism of each sliding member might bend when the reactions from the pins 2b and 6b are transmitted to the nut 17. Particularly, the second lever 21 could bend, because it is longer than the first lever 20. The bending of the first and second levers 20 and 21 reduces the precision of centering the workpiece.

The gap between the recess 17a of the nut 17 and the projection 20a of the first lever 20, and the gap between the projection 20b of the first lever 20 and the recess 21a of the second lever 21 cause backlash of both levers 20 and 21. The backlash of those levers also lowers the work centering precision.

Accordingly, it is a primary object of the present invention to provide a chuck device which has a simple structure to ensure a lower manufacturing cost, and which maintains high centering accuracy, even after an extended use of the chuck device.

To achieve the foregoing and other objects and in accordance with the purpose of the present invention, an improved chuck device comprising the features of claim 1 is provided. The chuck device comprises an index plate provided on a base, a chuck plate having a chuck for holding a workpiece, and a center plate located between, and coupled to the index plate and the chuck plate. The index plate is rotated by a motor provided in the base. The chuck device further includes a first adjusting mechanism for adjusting the position of the center plate with respect to the index plate, and a second adjusting mechanism for adjusting the position of the chuck plate with respect to the center plate.

The center plate has a first hole and a second hole formed eccentrically with respect to the center of the center plate, at different positions. The chuck device of this invention further includes a first pivotal mechanism, fixed to the index plate, for pivotally supporting the center plate with respect to the index plate, and a second pivotal mechanism, fixed to the chuck plate, for pivotally supporting the center plate with respect to the chuck plate.

The first and second pivotal mechanisms are fitted in the first and second holes of the center plate, respectively. The first and second pivotal mechanisms press the center plate against the index plate and the chuck plate. The center plate is pivoted around the first pivotal mechanism with respect to the index plate, based on the manipulation of the first adjusting mechanism. Further, the chuck plate is pivoted around the second pivotal mechanism, with respect to the center plate, based on the manipulation of the second adjusting mechanism.

An embodiment of the invention, and preferred objects and advantages thereof, may best be understood by reference to the following description together with the accompanying drawings, in which:
Fig. 1 is a partial side view of a chuck device embodying the present invention;
Fig. 2 is a cross-sectional view illustrating three plates connected by pre-loading bolts for use in the chuck device of Fig. 1;
Fig. 3 is a front view of the chuck device shown in Fig. 1;
Fig. 4 is an enlarged cross-sectional view of pivotal mechanisms used in the chuck device;
Fig. 5 is a cross-sectional view taken along line C-C in Fig. 1;
Fig. 6 is a cross-sectional view taken along line D-D in Fig. 1;
Fig. 7 is a cross-sectional view taken along line E-E in Fig. 1;
Fig. 8 is a cross-sectional view taken along line F-F in Fig. 1;
Fig. 9 is a partial side view of a conventional chuck device; and
Fig. 10 is a cross-sectional view taken along line G-G in Fig. 9.

### EMBODIMENT

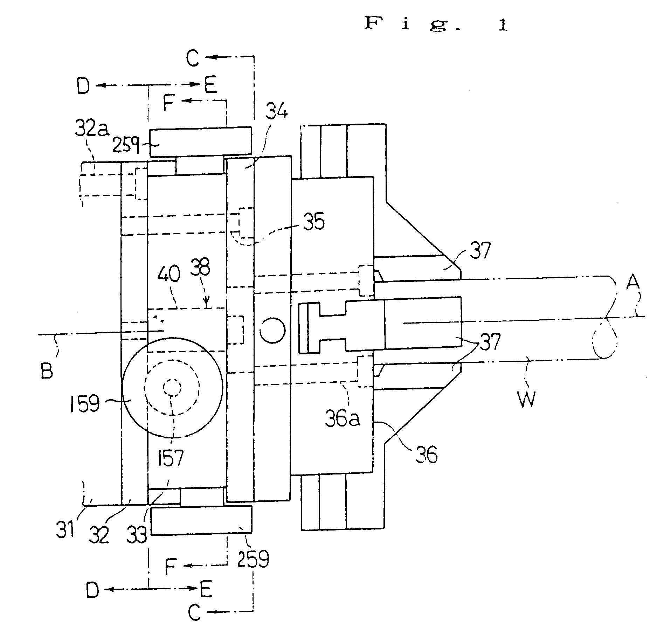

A preferred embodiment of the present invention will now be described referring to Figs. 1 through 8.

Fig. 1 illustrates an index plate 32 that is securely fixed to the front portion of a base 31 of a chuck device by bolts 32a. The index plate 32 is shaped into a disc with a uniform thickness, and is rotated by a motor (not shown) provided in the base 31.

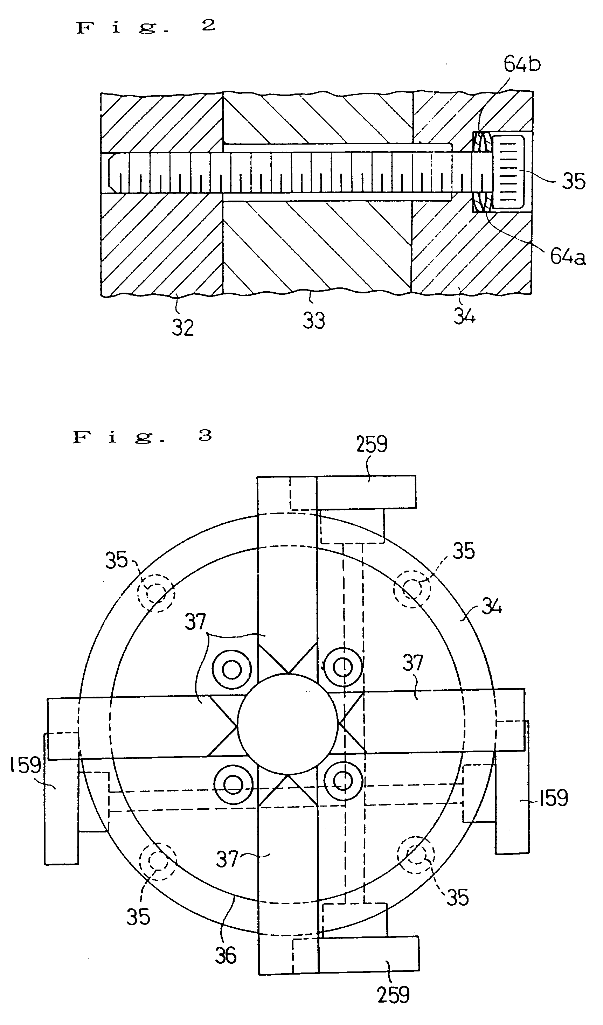

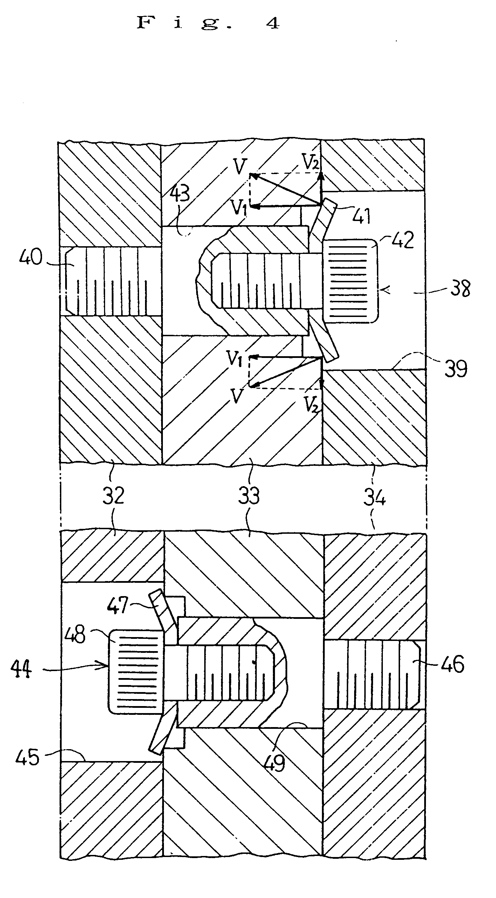

A center plate 33 and a chuck plate 34 are connected together by means of a plurality of pre-loading bolts 35 (four bolts in this embodiment). More specifically, each bolt 35 is inserted via a pair of coned disk springs 64a and 64b into the chuck plate 34 and the center plate 33, from the front side of the chuck plate 34, as shown in Fig. 2. Each bolt 35 is engaged at its distal end portion with the index plate 32, and is engaged at the vicinity of its head portion, with the chuck plate 34. The chuck plate 34 has a disc shape with a uniform thickness.

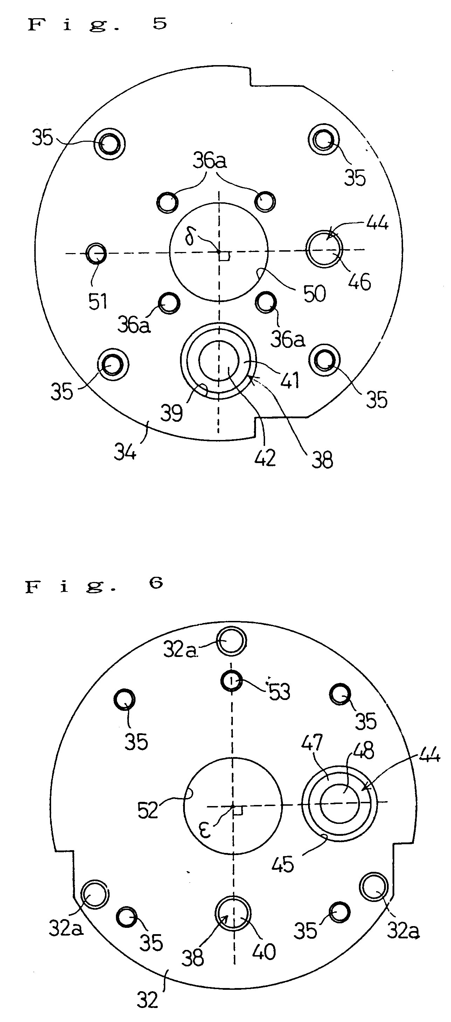

As shown in Figs. 1 and 3, a well-known scroll chuck 36 is securely fixed to the front of the chuck plate 34, by bolts 36a. This scroll chuck 36 has four chucking claws 37 supported slidable in the radial direction. The chucking claws 37 serve to hold a workpiece W.

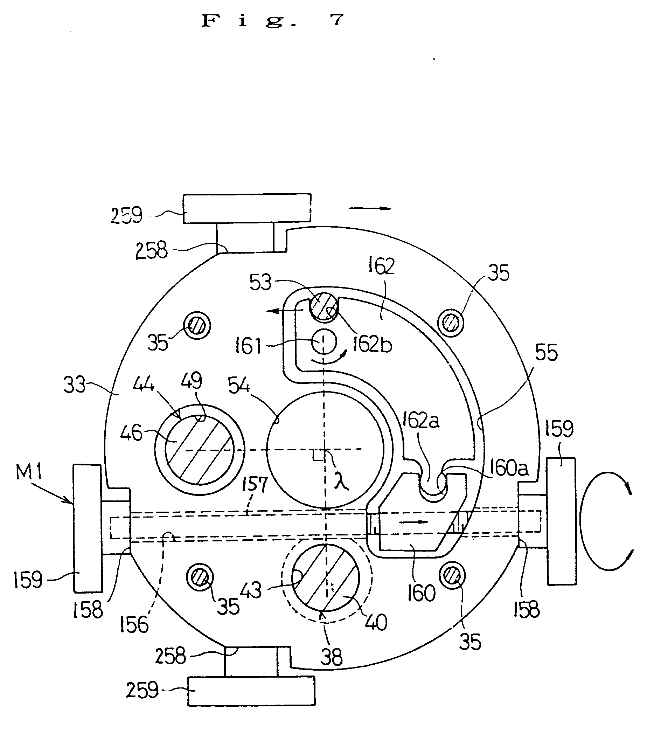

As shown in Figs. 1 and 4, the center plate 33 is coupled to the index plate 32, in such a way that both plates 32 and 33 are pivotable around a first pivotal mechanism 38, while sliding with respect to each other. The first pivotal mechanism 38 comprises a pivot bolt 40, a pre-loading belleville spring 41 having an opening in the center, and a spring fitting bolt 42.

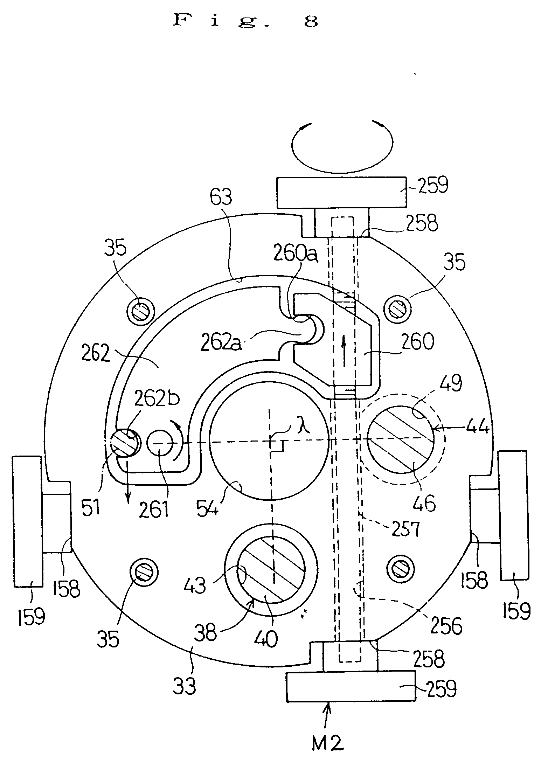

As shown in Figs. 4 and 8, the center plate 33 has a first hole 43. The pivot bolt 40 has a column shaped head fitted into the first hole 43, and a screw portion which engages the index plate 32.

As shown in Figs. 4 and 5, the chuck plate 34 has an opening 39 corresponding to the first pivotal mechanism 38. The spring fitting bolt 42 is engaged with a female screw formed on the head of the pivot bolt 40, via the belleville spring 41, to fix the belleville spring 41 to the pivot bolt 40. The belleville spring 41 and the head of the bolt 42 are placed into the opening 39.

As shown in Fig. 4, the belleville spring 41 has a line contact with the periphery of a stepped recess of the center plate 33, which is formed on the center plate 33, and which is joined with the first hole 43. Acting on the contact portion is force (vector V) normal to the contact surface of the belleville spring 41, and directed toward the center plate 33 from the belleville spring 41.

The force V includes two vectorial force components a first force (vector V₁), which is normal to the face of the center plate 33 that contacts the index plate 32, and a second force (vector V₂) parallel to the face of the center plate 33. Thus, the center plate 33 is pressed against the index plate 32 by the first forces V₁. Further, the belleville spring 41 (i.e., the first pivotal mechanism 38) is positioned on the basis of the resultant of the second forces V₂, in such a way that the center of the belleville spring 41 coincides with the center of the first hole 43.

Assume that there is a very slight clearance between the head of the pivot bolt 40 and the hole 43 of the center plate 33. In this case, if the belleville spring 41 did not exist, the center plate 33 would wobble when pivoting, and would not thus smoothly pivot around the first pivotal mechanism 38.

When the belleville spring 41 is used, the eccentricity or unmatching between the axial center of the first pivotal mechanism 38, and that of the first hole 43, is corrected by the elastic action of the belleville spring 41. The belleville spring 41 causes the pivotal center of the center plate 33 to always match the axial center of the hole 43. Even if a clearance exists between the head of the pivot bolt 40 and the hole 43 of the center plate 33, the center plate 33 can be pivoted smoothly.

As shown in Fig. 4, the chuck plate 34 is connected to the center plate 33 in such a way that both plates 33 and 34 are pivotable around a second pivotal mechanism 44 while sliding. The second pivotal mechanism 44 includes a pivot bolt 46, a pre-loading belleville spring 47 having an opening in the center, and a spring fitting bolt 48. As shown in Figs. 4 and 8, the center plate 33 has a second hole 49. The pivot bolt 46 has a column shaped head fitted into the second hole 49, and a screw portion which engages the chuck plate 34.

As shown in Figs. 4 and 6, the index plate 32 has an opening 45 which is registrably located with respect to the second pivotal mechanism 44. The spring fitting bolt 48 engages a female screw formed on the head of the pivot bolt 46, via the belleville spring 47, to fix the belleville spring 47 to the pivot bolt 46, as shown in Fig. 4. At this time, the belleville spring 47 and the head of the bolt 48 are placed into the opening 45.

The belleville spring 47 has a line contact with the periphery of a stepped recess of the center plate 33, which is formed on the center plate 33, and which is joined with the second hole 49. As is the case of the first pivotal mechanism 38, the center plate 33 is pressed against the chuck plate 34, by means of the belleville spring 47. At the same time, the belleville spring 47 (i.e., the second pivotal mechanism 44) is positioned in such a way that the center of the belleville spring 47 is registrably located with respect to the center of the second hole 49. Even if a clearance exists between the head of the pivot bolt 46 and the hole 49 of the center plate 33, the chuck plate 34 can be pivoted smoothly with respect to the center plate 33.

As the belleville spring 41 of the first pivotal mechanism 38 is placed in the opening 39, the rotation of the chuck plate 34 is limited by the contact of the belleville spring 47 with the wall which forms the opening 39. Likewise, since the belleville spring 47 of the second pivotal mechanism 44 is placed in the opening 45, the rotation of the center plate 33 is limited by the contact of the belleville spring 47 with the wall that forms the opening 45.

The index plate 32, the center plate 33 and the chuck plate 34, which are pressed together by the first pivotal mechanism 38, the second pivotal mechanism 44 and a plurality of bolts 35, are rotated integrally by the motor (not shown) provided in the base 31.

According to this embodiment, the three plates 32, 33 and 34 are pressed together by the bolts 35, and the index plate 32 is pressed against the center plate 33 by the first pivotal mechanism 38, while the center plate 33 is pressed against the chuck plate 34 by the second pivotal mechanism 44. The force that connects the plates is greater than the force in conventional chuck devices, which connects the individual plates only by the bolts 35. The chuck device according to this embodiment can therefore stably hold a workpiece W at the position specified by the centering of the workpiece W, and prevents the workpiece W from shifting.

Fig. 5 illustrates the chuck plate 34 as viewed from the side of the scroll chuck 36. The chuck plate 34 has a central bore 50, in which the workpiece W is to be inserted. An engaging pin 51 is attached to the chuck plate 34. The distal end of the engaging pin 51 protrudes from the back of the chuck plate 34 toward the center plate 33. As shown in Fig. 5, the center of the engaging pin 51 and the axial center of the second pivotal mechanism 44 are located on a first line passing through the center δ of the chuck plate 34. The axial center of the first pivotal mechanism 38 is located on a second line also passing through the center δ, and which is perpendicular to the first line.

Fig. 6 illustrates the index plate 32 as viewed from the side of the center plate 33. The index plate 32 has a central bore 52, in which the workpiece W is inserted. An engaging pin 53 is attached to this index plate 32. The distal end of the engaging pin 53 protrudes from the front of the index plate 32 toward the center plate 33. As shown in Fig. 6, the center of the engaging pin 53 and the axial center of the first pivotal mechanism 38 lie on a first line passing through the center ε of the index plate 32, and the axial center of the second pivotal mechanism 44 on a second line also passing through the center ε, and which is perpendicular to the first line.

Fig. 7 illustrates that face of the center plate 33 which faces the index plate 32. As shown in Fig. 7, the axial centers of the first and second pivotal mechanism 38 and 44 are located 90° apart, with respect to the center λ of the center plate 33. The center plate 33 has a central bore 54, in which the workpiece W is inserted. The center plate 33 further has a first hollow or depression 55 whose bottom is parallel to the end face of the center plate 33.

The center plate 33 has a passage 156 which horizontally penetrates through the center plate 33, between the bore 54 and the first hole 43. The passage 156 communicates with the first hollow 55. A feed screw 157 is inserted into the passage 156 across the first hollow 55.

The center plate 33 has two notches 158 which are respectively formed in the vicinity of the end openings of the passage 156. Handles 159, which are in close contact with the associated notches 158, are securely fixed to the respective ends of the feed screw 157, they protrude outward from the corresponding notches 158. Both handles 159 prevent the feed screw 157 from getting detached from the center plate 33. The manipulation of the handles 159 rotates the feed screw 157.

A nut 160, located in the first hollow 55 and having a recess 160a, engages with the feed screw 157. The back of the nut 160 is in close proximity to the bottom of the first hollow 55, and the front of the nut 160 in close proximity to the index plate 32. The rotation of the nut 160 around the feed screw 157 is therefore limited by the bottom of the first hollow 55 and the index plate 32. As the feed screw 157 rotates. Thus, the nut 160 moves horizontally along the feed screw 157.

A pivot 161 is fixed in the first hollow 55, on a line connecting the center λ and the axial center of the first pivotal mechanism 38. A lever 162 is rotatably supported at its proximal end on this pivot 161. The lever 162 is bent to match the shape of the first hollow 55.

The lever 162 has a projection 162a which is formed at the distal end of the lever 162, and which engages the recess 160a of the nut 160, and a recess 162b formed at the proximal end of the lever 162. The recess 162b engages the engaging pin 53, which protrudes into the first hollow 55 from the index plate 32. The movement of the nut 160 is thus transmitted, via the lever 162, to the engaging pin 53. As is apparent from the above description, the feed screw 157, handles 159, nut 160, pivot 161, and lever 162 form a first adjusting mechanism M1, for adjusting the position of the center plate 33, with respect to the index plate 32 and the position of the chuck plate 34.

Fig. 8 illustrates that face of the center plate 33 which faces the chuck plate 34. The center plate 33 has a second hollow 63 similar to the first hollow 55 shown in Fig. 7. The center plate 33 is further provided with members 257 and 259 to 262, which correspond to the members 157 and 159 to 162, respectively, that form the first adjusting mechanism M1. That is, the feed screw 257, handles 259, nut 260, pivot 261 and lever 262 form a second adjusting mechanism M2 for adjusting the position of the chuck plate 34, with respect to the index plate 32 and the center plate 33.

The second adjusting mechanism M2 functions in substantially the same manner as the first adjusting mechanism M1. The second adjusting mechanism M2 differs from the first adjusting mechanism M1 in that the movement of the nut 260 is transmitted via the lever 262 to the engaging pin 51. The pin 51 protrudes into the second hollow 63 from the chuck plate 34. Furthermore, the nut 260 moves vertically along the feed screw 257, in accordance with the rotation of the feed screw 257.

A description will now be given of the procedure for centering the workpiece W using the chuck device according to this embodiment.

First, the workpiece W is held by the scroll chuck 36 in the chuck device. Then, the motor of the chuck device is activated with a measuring instrument (not shown), such as a dial gauge, made to contact the outer surface of the workpiece W. Consequently, the index plate 32, the center plate 33, the chuck plate 34, the scroll chuck 36 and the workpiece W are rotated together.

The measuring instrument measures how much the axial center A of the workpiece W is shifted from the axial center B of the index plate 32. After the motor is stopped, the first and second adjusting mechanisms M1 and M2 are manipulated so as to reduce the eccentricity of the workpiece W with respect to the index plate 32 to zero.

The first adjusting mechanism M1 is operated with the handles 159. When the feed screw 157 is rotated by operating the handles 159, the nut 160 slides horizontally. For instance, when the handles 159 are manipulated to move the nut 160 rightward from the position indicated in Fig. 7, the lever 162, which is engaged with the nut 160, tends to rotate counterclockwise, around the pivot 161. Since the recess 162b of the lever 162 engages the pin 53 which protrudes from the index plate 32, the movement of the lever 162 is transmitted to the pin 53. The lever 162 causes the pin 53 to move leftward.

As the index plate 32 is fixed to the base 31, however, the engaging pin 53 which is fixed to the index plate 32 is not moved by the lever 162. The center plate 33 therefore receives the reaction from the engaging pin 53, via the lever 162 and nut 160, at the same time the handles 159 are manipulated. This reaction moves the center plate 33 rightward (Fig. 7) with respect to the index plate 32.

Because the center plate 33 is supported pivotable around the first pivotal mechanism 38 with respect to the index plate 32, the aforementioned reaction causes the center plate 33 to rotate clockwise. The amount of displacement of the lever 162 is considerably smaller than the amount of rotation of the feed screw 157. Therefore, the clockwise rotation of the center plate 33 around the first pivotal mechanism 38 shifts the center plate 33 slightly rightward with respect to the index plate 32. As the center plate 33 is coupled to the chuck plate 34 by the second pivotal mechanism 44, the chuck plate 34, the scroll chuck 36 and the workpiece W move slightly rightward integrally with the center plate 33.

When the handles 159 are manipulated to cause the nut 160 to move leftward from the position indicated in Fig. 7, the center plate 33, the chuck plate 34, the scroll chuck 36 and the workpiece W move together slightly in the leftward direction.

The second adjusting mechanism M2 is operated by the handles 259. When the handles 259 are manipulated to move the nut 260 upward from the position indicated in Fig. 8, the lever 262 acts to move the engaging pin 51 downward, similarly to the first adjusting mechanism M1.

As the pivot bolt 46, which is fitted into the second hole 49 of the center plate 33, is fixed to the chuck plate 34, the force which causes the engaging pin 51 to move downward and to rotate the chuck plate 34 counterclockwise around the second pivotal mechanism 44, with respect to the center plate 33. The amount of displacement of the lever 262 is considerably smaller than the amount of rotation of the feed screw 257. Therefore, the counterclockwise rotation of the chuck plate 34 around the second pivotal mechanism 44 shifts the chuck plate 34 slightly downward with respect to the center plate 33. The scroll chuck 36 and the workpiece W move slightly downwardly and integrally with the chuck plate 34.

When the handles 259 are manipulated to move the nut 260 downward from the position indicated in Fig. 8, the chuck plate 34, the scroll chuck 36 and the workpiece W move slightly upwardly together.

The force to pivot the chuck plate 34 around the second pivotal mechanism 44 does not work on the index plate 32. When the position of the chuck plate 34 is adjusted, the center plate 33 and the index plate 32 do not move relatively to each other, while they are positioned integrally with each other.

As is apparent from the foregoing description, the position of the workpiece W is adjusted horizontally by the first adjusting mechanism M1, and is adjusted vertically by the second adjusting mechanism M2. According to the chuck device of this embodiment, it is possible to accomplish the centering of the workpiece W in such a way that the axial center A of the workpiece W registers with, and matches the axial center B of the index plate 32, by manipulating the first and second adjusting mechanisms M1 and M2. The workpiece W may be positioned with respect to the index plate 32 in such a way that the axial center A of the workpiece W is shifted by a predetermined amount from the axial center B of the index plate 32.

According to this embodiment, the levers 162 and 262, which are respectively engaged with the nuts 160 and 260 and the engaging pins 51 and 53, transmit the movements of the nuts 160 and 260 to the corresponding engaging pins 51 and 53. Even if the forces to restore the levers 162 and 262 to the original states were generated thereon, after the workpiece centering is completed, therefore, the forces are relaxed by the engaging portions between the nuts 160 and 260, with the respective levers 162 and 262, and are not transmitted directly to the associated nuts 160 and 260. The center plate 33 and the chuck plate 34 can thus securely maintain the positions acquired upon completion of the centering.

The manufacturing cost for the first and second pivotal mechanisms 38 and 44 is significantly lower than the manufacturing cost required to improve the precision of the engagement between the projections 2a and 6a and the guide grooves 13 in conventional devices. The manufacturing cost for the chuck device of this embodiment is thus reduced considerably compared with that of conventional devices.

Since this embodiment does not use a member corresponding to the second lever 21 in the conventional device described above, there will be no reduction in the accuracy of the centering, which may otherwise be originated from the second lever 21. Further, one position adjusting mechanism of the conventional art has two engaging portions (between the nut 17 and the first lever 20, and between the first lever 20 and the second lever 21), whereas there is only one engaging portion (between the nut 160 and the lever 162) in one adjusting mechanism according to this embodiment. This design feature increases the centering accuracy.

According to this embodiment, the members forming the first and second pivotal mechanisms 38 and 44 are worn out evenly by their rotations. Even in this case, the belleville springs 41 and 47 always keep the axial centers of the pivotal mechanisms 38 and 44 in their proper location. The centering accuracy of the present chuck device will not significantly drop, even after extended use. In addition, the index plate 32, the center plate 33 and the chuck plate 34 are worn out evenly by the mutual rubbing, and, the belleville springs 41 and 47 press those plates together. The plates will not therefore become wobbly even after extended use.

Although only one embodiment of the present invention has been described herein, it should be apparent to those skilled in the art that the present invention may be embodied in many other specific forms without, departing from the scope of the invention. Particularly, it should be understood that the first and second pivotal mechanisms 38 and 44 may be arranged at arbitrary positions, so that the line connecting the axial center of the first pivotal mechanism 38 and the center λ of the center plate 33, and the line connecting the axial center of the second pivotal mechanism 44 and that center λ, define an angle that is different from 0° or 180°.

Further, the engaging pins 51 and 53 and the first and second adjusting mechanisms M1 and M2 may be arranged at positions that are different from those in the above-described embodiment. The bolt 35 may optionally be omitted.

Therefore, the present examples and embodiment are to be considered as illustrative and not restrictive.

## Claims

1. A chuck device comprising an index plate (32) provided on a base including a motor for driving the index plate (32); a chuck plate (34) having a chuck (36) for holding a workpiece (W); a center plate (33) located between, and connected to the index plate (32) and the chuck plate (34); a first adjusting mechanism (M1) for adjusting the position of the center plate (33) with respect to the index plate (32); and a second adjusting mechanism (M2) for adjusting the position of the chuck plate (34) with respect to the center plate (33), the chuck device being characterized in that:
the center plate (33) having a first hole (43) and a second hole (49) formed eccentrically with respect to a center of the center plate (33); and
the chuck device further comprising:
first pivot means (38), secured to the index plate (32), for pivotally supporting the center plate (33) to the index plate (32), said first pivot means (38) being fitted in said first hole (43) and pressing the center plate (33) against the index plate (32), wherein the center plate (33) is pivoted around said first pivot means (38) with respect to the index plate (32) based on the manipulation of the first adjusting mechanism (M1); and
second pivot means (44), secured to the chuck plate (34), for pivotally supporting the center plate (33) to the chuck plate (34), said second pivot means (44) being fitted in said second hole (49) of the center plate (33) and pressing the center plate (33) against the chuck plate (34), wherein the chuck plate (34) is pivoted around said second pivot means (44) with respect to the center plate (33) based on the manipulation of the second adjusting mechanism (M2).

2. The chuck device according to claim 1, wherein said first pivot means (38) includes:
a pivot bolt (40) secured to the index plate (32);
said pivot bolt (40) having a head, wherein said head is fitted in said first hole (43) of the center plate (33); and
a pre-loading belleville spring (41), which is secured to said pivot bolt (40) and which is in contact with the center plate (33) at the periphery of said first hole (43).

3. The chuck device according to claim 1, wherein said second pivot means (44) includes:
a pivot bolt (46) secured to said chuck plate (34);
said pivot bolt (46) having a head, wherein said head is fitted in said second hole (49) of the center plate (33); and
a pre-loading belleville spring (47), which is secured to said pivot bolt (46) and which is in contact with the center plate (33) at the periphery of said second hole (49).

4. The chuck device according to claim 1,
wherein the center plate (33) has a first hollow (55) formed opposite to the index plate (32);
wherein the index plate (32) has an engaging pin (53) which protrudes into said first hollow (55); and
wherein said first adjusting mechanism (M1) includes:
a feed screw (157) passing through said first hollow (55), and supported rotatably on the center plate (33);
a nut (160) engaged with said feed screw (157) in said first hollow (55), and movable along said feed screw (157), based on the rotation of said feed screw (157); and
a lever (162), provided pivotally in said first hollow (55), for transmitting the movement of said nut (160) to said engaging pin (53).

5. The chuck device according to claim 1,
wherein the center plate (33) has a second hollow (63) formed opposite to the chuck plate (34);
wherein the chuck plate (34) has an engaging pin (51) protruding into said second hollow (63); and
wherein said second adjusting mechanism (M2) includes:
a feed screw (257) passing through said second hollow (63), and supported rotatably on the center plate (33);
a nut (260) engaged with said feed screw (257) in said second hollow (63), and movable along said feed screw (257), based on the rotation of said feed screw (257); and
a lever (262), provided pivotally in said second hollow (63), for transmitting the movement of said nut (260) to said engaging pin (51).

6. The chuck device according to any one of claims 1 to 5, wherein said first and second pivot means (38, 44) are arranged so that a line connecting an axial center of said first pivot means (38) and a center λ of said center plate (33), and a line connecting an axial center of said second pivot means (44) and said center λ, define an angle different from 0° or 180°.

## Patentansprüche

1. Aufspannvorrichtung, umfassend eine Indexscheibe (32), die auf einer Basis mit einem Motor zum Antreiben der Indexscheibe (32) angeordnet ist, eine Aufspannscheibe (34) mit einem Spannfutter (36) zum Halten eines Werkstückes (W), eine zwischen der Indexscheibe (32) und der Aufspannscheibe (34) angeordnete, mit diesen Scheiben verbundene Mittelscheibe (33), einen ersten Einstellmechanismus (M1) zum Einstellen der Position der Mittelscheibe (33) relativ zu der Indexscheibe (32) und einen zweiten Einstellmechanismus (M2) zum Einstellen der Position der Aufspannscheibe (34) relativ zu der Mittelscheibe (33), wobei die Aufspannvorrichtung dadurch **gekennzeichnet** ist, daß
die Mittelscheibe (33) ein erstes Loch (43) und ein zweites Loch (49) hat, die relativ zur Mitte der Mittelscheibe (33) exzentrisch ausgebildet sind, und
daß die Aufspannvorrichtung ferner umfaßt:
eine an der Indexscheibe (32) befestigte erste Schwenkvorrichtung (38), um die Mittelscheibe (33) auf der Indexscheibe (32) verschwenkbar zu lagern, wobei die erste Schwenkvorrichtung (38) in das erste Loch (43) eingefügt ist und die Mittelscheibe (33) gegen die Indexscheibe (32) preßt, und wobei die Mittelscheibe (33) durch Betätigung des ersten Einstellmechanismus (M1) relativ zu der Indexscheibe (32) um die erste Schwenkvorrichtung (38) verschwenkbar ist; und
eine an der Aufspannscheibe (34) befestigte zweite Schwenkvorrichtung (44), um die Mittelscheibe (33) auf der Aufspannscheibe (34) verschwenkbar zu lagern, wobei die zweite Schwenkvorrichtung (44) in das zweite Loch (49) der Mittelscheibe (33) eingefügt ist und die Mittelscheibe (33) gegen die Aufspannscheibe (34) preßt, und wobei die Aufspannscheibe (34) durch Betätigung des zweiten Einstellmechanismus (M2) relativ zu der Mittelscheibe (33) um die zweite Schwenkvorrichtung (44) verschwenkbar ist.

2. Aufspannvorrichtung nach Anspruch 1, dadurch **gekennzeichnet**, daß die erste Schwenkvorrichtung (38) umfaßt:
einen Drehbolzen (40), der an der Indexscheibe (32) befestigt ist, wobei der Drehbolzen (40) einen Kopf hat, der in das erste Loch (43) der Mittelscheibe (33) eingesetzt ist, und
eine Vorspann-Tellerfeder (41), die an dem Drehbolzen (40) befestigt ist und am Umfang des ersten Loches (43) mit der Mittelscheibe (33) in Kontakt steht.

3. Aufspannvorrichtung nach Anspruch 1, dadurch **gekennzeichnet**, daß die zweite Schwenkvorrichtung (44) umfaßt:
einen Drehbolzen (46), der an der Aufspannscheibe (34) befestigt ist, wobei der Drehbolzen (46) einen Kopf hat, der in das zweite Loch (49) der Mittelscheibe (33) eingesetzt ist, und
eine Vorspann-Tellerfeder (47), die an dem Drehbolzen (46) befestigt ist und am Umfang des zweiten Loches (49) mit der Mittelscheibe (33) in Kontakt steht.

4. Aufspannvorrichtung nach Anspruch 1, dadurch **gekennzeichnet**, daß die Mittelscheibe (33) eine erste Höhlung (55) hat, die der Indexscheibe (32) gegenüberliegend ausgebildet ist,
daß die Indexscheibe (32) einen Eingriffstift (53) hat, der in die erste Höhlung (55) hineinragt, und
daß der erste Einstellmechanismus (M1) umfaßt:
eine Zustellschraube (157), die durch die erste Höhlung (55) hindurchreicht und drehbar an der Mittelscheibe (33) gelagert ist,
eine Mutter (160), die mit der Zustellschraube (157) in der ersten Höhlung (55) in Eingriff steht und entlang der Zustellschraube (157) in Abhängigkeit der Drehung der Zustellschraube (157) bewegbar ist, und
einen Hebel (162), der in der ersten Höhlung (55) verschwenkbar angeordnet ist, um die Bewegung der Mutter (160) auf den Eingriffstift (53) zu übertragen.

5. Aufspannvorrichtung nach Anspruch 1,
dadurch **gekennzeichnet**, daß die Mittelscheibe (33) eine zweite Höhlung (63) hat, die der Aufspannscheibe (34) gegenüberliegend ausgebildet ist,
daß die Aufspannscheibe (34) einen Eingriffstift (51) hat, der in die zweite Höhlung (63) hineinragt, und
daß der zweite Einstellmechanismus (M2) umfaßt:
eine Zustellschraube (257), die durch die zweite Höhlung (63) hindurchreicht und drehbar an der Mittelscheibe (33) angeordnet ist,
eine Mutter (260), die mit der Zustellschraube (257) in der zweiten Höhlung (63) in Eingriff steht und entlang der Zustellschraube (257) in Abhängigkeit der Drehung der Zustellschraube (257) bewegbar ist, und
einen Hebel (262), der in der zweiten Höhlung (63) verschwenkbar angeordnet ist, um die Bewegung der Mutter (260) auf den Eingriffstift (51) zu übertragen.

6. Aufspannvorrichtung nach einem der Ansprüche 1 bis 5, dadurch **gekennzeichnet**, daß die erste und die zweite Schwenkvorrichtung (38, 44) derart angeordnet sind, daß eine Gerade, die eine Mittelachse der ersten Schwenkvorrichtung (38) und einen Mittelpunkt λ der Mittelscheibe (33) verbindet, und eine Gerade, die eine Mittelachse der zweiten Schwenkvorrichtung (44) und den Mittelpunkt λ verbindet, einen Winkel bilden, der nicht 0° und nicht 180° beträgt.

## Revendications

1. Un dispositif de serrage comprenant : un plateau d'indexage (32) prévu sur un socle comportant un moteur d'entraînement du plateau d'indexage (32); un plateau de serrage (34) comportant un mandrin à centrage (36) pour le maintien d'une pièce à usiner (W); un plateau de centrage (33) disposé entre le plateau d'indexage (32) et le plateau de serrage (34), et relié à ceux-ci; un premier mécanisme de réglage (M1) pour régler la position du plateau de centrage (33) par rapport au plateau d'indexage (32); et un second mécanisme de réglage (M2) pour régler la position du plateau de serrage (34) par rapport au plateau de centrage (33), le dispositif de serrage étant caractérisé en ce que :
le plateau de centrage (33) présente un premier trou (43) et un second trou (49) disposés de manière excentrée par rapport au centre du plateau (33); et en ce que le dispositif de serrage comporte en outre :
des premiers moyens de pivotement (38), fixés au plateau d'indexage (32), pour supporter à pivotement le plateau de centrage (33) sur le plateau d'indexage (32), lesdits premiers moyens de pivotement (38) étant engagés dans ledit premier trou (43) et pressant le plateau de centrage (33) contre le plateau d'indexage (32), ledit plateau de centrage (33) étant amené à tourner autour des dit premiers moyens de pivotement (38) par rapport au plateau d'indexage (32) par manipulation dudit premier mécanisme de réglage (M1); et
des seconds moyens de pivotement (44), fixés au plateau de serrage (34), pour supporter à pivotement le plateau de centrage (33) sur le plateau de serrage (34), lesdits seconds moyens de pivotement (44) étant engagés dans ledit second trou (49) et pressant le plateau de centrage (33) contre le plateau de serrage (34), ledit plateau de serrage (34) étant amené à tourner autour desdits seconds moyens de pivotement (44) par rapport au plateau de centrage (33) par manipulation dudit second mécanisme de réglage (M2).

2. Le dispositif de serrage selon la revendication 1, dans lequel lesdits premiers moyens de pivotement (38) comportent :
une cheville de pivotement (40) fixée au plateau d'indexage (32); ladite cheville de pivotement (40) comportant une tête, laquelle est engagée dans ledit premier trou (43) du plateau de centrage (33); une rondelle élastique Belleville de précontrainte (41), qui est fixée à ladite cheville de pivotement (40) et qui est en contact avec le plateau de centrage (33) à la périphérie dudit premier trou (43).

3. Le dispositif de serrage selon la revendication 1, dans lequel lesdits seconds moyens de pivotement (44) comportent :
une cheville de pivotement (46) fixée audit plateau de serrage (34);
ladite cheville de pivotement (46) comportant une tête, laquelle est engagée dans ledit second trou (49) du plateau de centrage (33);
une rondelle élastique Belleville de précontrainte (47) qui est fixée à ladite cheville de pivotement (46) et qui est en contact avec le plateau de centrage (33) à la périphérie dudit second trou (49).

4. Le dispositif de serrage selon la revendication 1,
dans lequel le plateau de centrage (33) présente un premier évidement (55) ménagé en face du plateau d'indexage (32);
dans lequel le plateau d'indexage (32) comporte un doigt d'entraînement (53) qui fait saillie dans ledit premier évidement (55); et
dans lequel ledit premier mécanisme de réglage (M1) comprend :
une vis de transmission (157) traversant ledit premier évidement (55), et montée à rotation sur le plateau de centrage (33);
un écrou (160) vissé sur ladite vis de transmission (157) dans ledit premier évidement (55), et mobile le long de ladite vis de transmission (157), par rotation de ladite vis de transmission (157); et
un levier (162), monté à pivotement dans ledit premier évidement (55), pour transmettre le déplacement dudit écrou (160) audit doigt d'entraînement (53).

5. Le dispositif de serrage selon la revendication 1,
dans lequel le plateau de centrage (33) présente un second évidement (63) ménagé en face du plateau de serrage (34);
dans lequel le plateau de serrage (34) comporte un doigt d'entraînement (51) qui fait saillie dans ledit second évidement (63); et
dans lequel ledit second mécanisme de réglage (M2) comprend :
une vis de transmission (257) traversant ledit second évidement (63), et montée à rotation sur le plateau de centrage (33);
un écrou (260) vissé sur ladite vis de transmission (257) dans ledit second évidement (55), et mobile le long de ladite vis de transmission (257), par rotation de ladite vis de transmission (257); et
un levier (262), monté à pivotement dans ledit second évidement (63), pour transmettre le déplacement dudit écrou (260) audit doigt d'entraînement (51).

6. Le dispositif de serrage selon l'une quelconque des revendications 1 à 5, dans lequel lesdits premier et second moyens de pivotement (38, 44) sont disposés de telle manière qu'une ligne reliant un centre axial desdits premiers moyens de pivotement (38) et un centre λ dudit plateau de centrage (33), et une ligne reliant un centre axial desdits seconds moyens de pivotement (44) et ledit centre λ, forment un angle différent de 0° ou de 180°.
